# EUROPEAN PATENT SPECIFICATION

(11) **EP 3 819 326 B1**
(45) Date of publication and mention of the grant of the patent: **13.11.2024**
(21) Application number: 19831236.5
(22) Date of filing: 13.06.2019
(51) Int. Cl.: C08G 77/06, C08G 77/38

(54) **METHOD FOR PRODUCING CARBINOL-MODIFIED ORGANOSILOXANE**
VERFAHREN ZUR HERSTELLUNG VON CARBINOL-MODIFIZIERTEM ORGANOSILOXAN
PROCÉDÉ DE PRODUCTION D'UN ORGANOSILOXANE MODIFIÉ PAR CARBINOL

(30) Priority: 02.07.2018 JP 2018125758; 22.11.2018 JP 2018219162
(43) Date of publication of application: 12.05.2021
(73) Proprietor: SHIN-ETSU CHEMICAL CO., LTD., Tokyo 100-0004 (JP)
(72) Inventor: GOTO, Tomoyuki, Annaka-shi, Gunma 379-0224 (JP); OKAZAWA, Yusuke, Annaka-shi, Gunma 379-0195 (JP)
(74) Representative: Mewburn Ellis LLP
(86) International application number: PCT/JP2019/023417
(87) International publication number: WO 2020/008829

(56) References cited:
- EP-A1- 2 980 123
- EP-A2- 0 433 746
- WO-A1-2014/073605
- WO-A1-2014/157681
- WO-A1-2014/157682
- JP-A- 2000 072 781
- JP-A- 2000 234 025
- JP-A- 2003 082 103
- JP-A- 2012 236 887
- JP-A- 2014 516 943
- JP-A- 2015 504 418
- JP-A- H0 488 024
- JP-A- H05 269 380
- JP-A- H1 017 670
- JP-A- S60 206 834
- US-A- 5 204 438
- US-A1- 2012 283 393
- US-A1- 2013 109 772
- US-A1- 2015 291 738

## Description

### TECHNICAL FIELD

This invention relates to a method for preparing a carbinol-modified organosiloxane, and more particularly, to a method for efficiently preparing a terminally carbinol-modified organosiloxane while minimizing formation of side reaction products.

### BACKGROUND ART

Carbinol-modified organosiloxanes are widely used as modifiers for polycarbonate and polyurethane resins (Patent Documents 1 to 4 and 6).

Among methods for preparing such organosiloxanes in an industrially efficient manner, for example, Patent Document 5 discloses a method for continuously preparing a carbinol-terminated diorganopolysiloxane.

Generally, in the modification of a resin with a modifier, if an organosiloxane in which carbinol modification has been hampered by side reactions is used as the modifier, the resin may undergo a decline of molecular weight and eventually lose mechanical properties.

The current requirement for resins of further improved performance necessitates minimizing side reactions during the preparation of carbinol-modified organosiloxanes.

### PRIOR ART DOCUMENTS

### PATENT DOCUMENTS

Patent Document 1: JP-A H10-182832
Patent Document 2: WO 2014/073605
Patent Document 3: JP-A H04-120132
Patent Document 4: JP-A S63-289012
Patent Document 5: JP-A 2010-174081
Patent Document 6: US 2013109772 A1

### SUMMARY OF THE INVENTION

### TECHNICAL PROBLEM

An object of the invention, which has been made under the above-mentioned circumstances, is to provide a method for efficiently preparing a carbinol-modified organosiloxane while minimizing formation of side reaction products in the terminal carbinol modification of organosiloxane.

### SOLUTION TO THE PROBLEM

Making extensive investigations to attain the above object, the inventors have found that a carbinol-modified organosiloxane having a minimal content of side reaction products is obtained by continuously reacting an organohydrogensiloxane with a carbinol compound in the presence of a predetermined amount of a platinum catalyst in a tubular reactor. The invention is predicated on this finding.

The invention is defined in the claims.

### ADVANTAGEOUS EFFECTS OF THE INVENTION

The preparation method of the invention is successful in efficiently forming a terminally carbinol-modified organosiloxane with less side reaction products.

With the inventive preparation method, the amount of platinum used can be reduced and the purification step can be accordingly simplified. Only a lesser amount of platinum is left behind, which prevents the resulting carbinol-modified organosiloxane from coloration due to the residual platinum.

A terminally carbinol-modified organosiloxane obtained from the inventive preparation method is useful as a resin modifier because of low contents of side reaction products and platinum.

### DESCRIPTION OF EMBODIMENTS

Now the invention is described in detail.

The invention provides a method for preparing a carbinol-modified organosiloxane, comprising at least the following steps (A) to (C):
step (A) of continuously feeding components (a) to (c) to a tubular reactor,
   (a) an organohydrogensiloxane having the following formula (I): 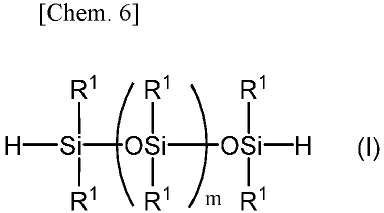 wherein R¹ is each independently a C₁-C₂₀ monovalent hydrocarbon group and m is an integer of 0 to 500,
   (b) a compound having the following formula (II):

      R²-Z-OH (II)

      wherein R² is vinyl or allyl, Z is a divalent hydrocarbon group, at least one hydrogen atom in the divalent hydrocarbon group may be substituted by halogen or a C₁-C₂₀ monovalent hydrocarbon group, and the divalent hydrocarbon group and the monovalent hydrocarbon group may be separated by oxygen, nitrogen or sulfur,
   (c) a platinum catalyst in an amount to give 0.005 ppm by weight (ppmw) to 0.2 ppmw of platinum metal based on the total weight of components (a) to (c),
step (B) of effecting hydrosilylation reaction of components (a) to (c) during passage through the tubular reactor, and
step (C) of taking out the reaction product.

### (1) Step (A)

Step (A) is to continuously feed components (a) to (c) to a tubular reactor.

Component (a) is the organohydrogensiloxane having formula (I) wherein R¹ is each independently a C₁-C₂₀ monovalent hydrocarbon group.

The C₁-C₂₀, preferably C₁-C₁₀ monovalent hydrocarbon group R¹ may be straight, branched or cyclic, and examples thereof include straight or branched alkyl groups such as methyl, ethyl, n-propyl, isopropyl, butyl, isobutyl, tert-butyl, n-pentyl, neopentyl, n-hexyl, and n-octyl; cycloalkyl groups such as cyclopentyl, cyclohexyl, and cyclooctyl; aryl groups such as phenyl, tolyl, xylyl, and naphthyl; aralkyl groups such as benzyl, phenylethyl, and phenylpropyl; and substituted forms of the foregoing groups in which some or all of the hydrogen atoms are substituted by halogen (e.g. fluorine, bromine and chlorine).

Of these, R¹ is preferably a C₁-C₆ alkyl or C₆-C₁₀ aryl group, with methyl and phenyl being more preferred.

In formula (I), m is an integer of 0 to 500, preferably an integer of 0 to 300, and more preferably an integer of 30 to 200.

If m exceeds 500, the resulting carbinol-modified organosiloxane has too high a molecular weight and can detract from the transparency and mechanical properties of a resin when used as a resin modifier.

Component (b) is a carbinol (or phenol) derivative having formula (II). Hydrosilylation reaction of component (b) with Si-H groups at both ends of component (a) forms a carbinol (or phenol)-modified organosiloxane.

In formula (II), R² is vinyl or allyl, preferably allyl.

Z is a divalent hydrocarbon group. The carbon count of the divalent hydrocarbon group is preferably 1 to 20 carbon atoms, more preferably 1 to 10 carbon atoms, though not particularly limited.

The divalent hydrocarbon group may be straight, branched or cyclic, and examples thereof include straight, branched or cyclic alkylene groups such as methylene, ethylene, trimethylene, propylene, tetramethylene, pentamethylene, hexamethylene, cyclohexylene, and octamethylene; arylene groups such as o-phenylene, m-phenylene, p-phenylene, methylphenylene, ethylphenylene, methoxyphenylene, and naphthylene; and substituted forms of the foregoing groups in which some or all of the hydrogen atoms are substituted by halogen atoms (e.g. fluorine, bromine and chlorine), the above C₁-C₂₀ monovalent hydrocarbon groups or the like. It is noted that some carbon in the divalent hydrocarbon group and the monovalent hydrocarbon group may be substituted by oxygen, nitrogen or sulfur.

Of these, Z is preferably a phenylene group which may be substituted with X, having the following formula (VII). 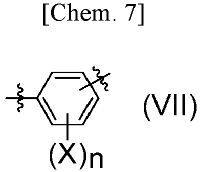 Herein the wavy line designates a point of attachment.

X is halogen or a C₁-C₂₀ monovalent hydrocarbon group. Examples of the monovalent hydrocarbon group are as exemplified above for R¹. Some carbon in the monovalent hydrocarbon group may be substituted by oxygen, nitrogen or sulfur. Examples of the monovalent hydrocarbon group in which some carbon is substituted by oxygen include C₁-C₅ alkoxy groups such as methoxy, ethoxy, isopropoxy, n-butoxy, and tert-butoxy.

X is preferably a C₁-C₅ alkyl or C₁-C₅ alkoxy group, more preferably methyl or methoxy.

The subscript n is an integer of 0 to 4, preferably 0 or 1, and more preferably 0.

Therefore, compounds having the following formula (III) are preferred as component (b). 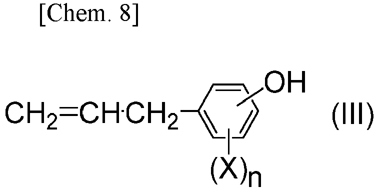 Herein X and n are as defined above.

Examples of component (b) which is preferably used herein include those of the following formulae, but are not limited thereto. Of these, (b-1), (b-2), (b-9; p=6), and (b-10; q=1, r=0) are especially preferred. 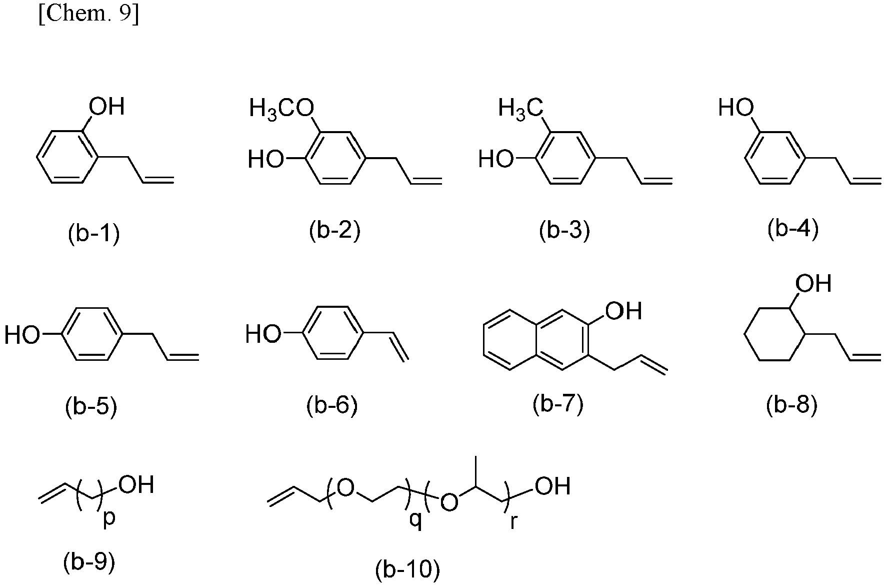 Herein p, q and r are each independently an integer of 0 to 50, preferably 0 to 10.

Component (c) is a platinum catalyst for promoting hydrosilylation. Examples of the platinum catalyst used herein include well-known catalysts such as platinum black, platinic chloride, chloroplatinic acid, the reaction products of chloroplatinic acid with monohydric alcohols, complexes of chloroplatinic acid with olefins, and platinum bisacetoacetate.

In step (A), components (a) and (b) are continuously fed to a tubular reactor in such a ratio that [moles of alkenyl groups in component (b)]/[moles of Si-H groups in component (a)] preferably ranges from 1.00 to 2.00, more preferably from 1.05 to 1.50, and even more preferably 1.02 to 1.10. If the ratio exceeds 2.00, sometimes unreacted component (b) must be removed or the cost of the reactant may be increased, with a loss of production efficiency. A ratio of less than 1.00 may increase the probability that side reaction occurs at the terminal reactive sites of the organosiloxane.

Component (c) is added in such an amount as to give 0.005 ppmw to 0.20 ppmw, and preferably 0.010 to 0.10 ppmw of platinum metal based on the total weight of components (a) to (c). An amount of less than 0.005 ppmw of platinum causes a problem to the progress of hydrosilylation reaction. An amount of 1.00 ppmw or more increases the probability that side reaction occurs at the terminal reactive sites of the organosiloxane.

In step (A), components (a) to (c) may be continuously fed to a tubular reactor separately via feed tubes, or some or all of components (a) to (c) may be premixed, for example, in a stirred tank and then fed continuously to a tubular reactor.

Notably, the tubular reactor used herein is not particularly limited and may be suitably selected from well-known flow reactors which allow for reaction of components (a) to (c) during passage therethrough.

In step (A), the temperature at which components (a) to (c) are fed is not particularly limited. The temperature is preferably 0°C to 150°C, more preferably 10°C to 100°C, and even more preferably 20°C to 80°C for smooth progress of reaction in step (B).

In addition to components (a) to (c), a solvent may be added in step (A).

Examples of the solvent include alkanes such as pentane, hexane, octane, decane, isododecane, cyclopentane, cyclohexane, methylcyclohexane, and ethylcyclohexane; aromatic hydrocarbons such as benzene, toluene, xylene, and ethylbenzene; ethers such as diethyl ether, ethyl propyl ether, glyme, and diglyme; and alcohols such as ethanol, 1-propanol, and 2-propanol.

### (2) Step (B)

Step (B) is to effect hydrosilylation reaction of component (a) with component (b) while passing components (a) to (c) through the tubular reactor.

The temperature in the tubular reactor in this step, though not particularly limited, is preferably 20°C to 180°C, more preferably 40°C to 150°C, and even more preferably 50°C to 120°C for enhancing the reaction efficiency and suppressing side reactions.

Notably, the total time of steps (A) and (B), though not particularly limited, is preferably 1 to 60 minutes, more preferably 3 to 45 minutes, and even more preferably 5 to 30 minutes, from the aspect of production efficiency.

### (3) Step (C)

Step (C) is to take out the reaction product obtained in step (B).

The take-out rate of the reaction product depends on the feed rate in step (A) and is not particularly limited. From the aspect of efficient production, the rate is preferably at least 100 kg/h, more preferably at least 200 kg/h, and even more preferably at least 300 kg/h.

The taken-out reaction product may be used as such, but if necessary, may be purified by well-known means prior to use.

The inventive preparation method described above is efficient to produce a terminally carbinol-modified organosiloxane with minimal contents of side reaction products and platinum.

The carbinol-modified organosiloxane obtained from the inventive preparation method has the following formula (IV). 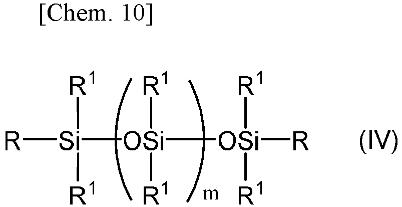 Herein R¹ and m are as defined above.

In formula (IV), R is each independently a group having the following formula (V) or (VI).

-(CH₂)ₖ-Z-OH (V)

-O-Z-R³ (VI)

In formula (V), k indicative of the number of methylene groups derived from vinyl or allyl represented by R² in the compound of formula (II) used as the reactant is 2 or 3.

In formula (VI), R³ is vinyl or allyl derived from R² in the compound of formula (II) used as the reactant, or a terminal group having -(CH2)ₖ-SiR¹₂O- resulting from reaction of Si-H in the organohydrogensiloxane of formula (I) with vinyl or allyl in the carbinol compound of formula (II) used as the reactants, wherein k is 2 or 3.

In formulae (V) and (VI), Z is as defined above. Likewise, Z is preferably a group having the above formula (VII). More preferably, Z is selected from those of the following formulae which are derived from the above-described compounds preferred as component (b), even more preferably (Z-1), (Z-2), (Z-8; p=6), and (Z-9; q=1, r=0), but not limited thereto. 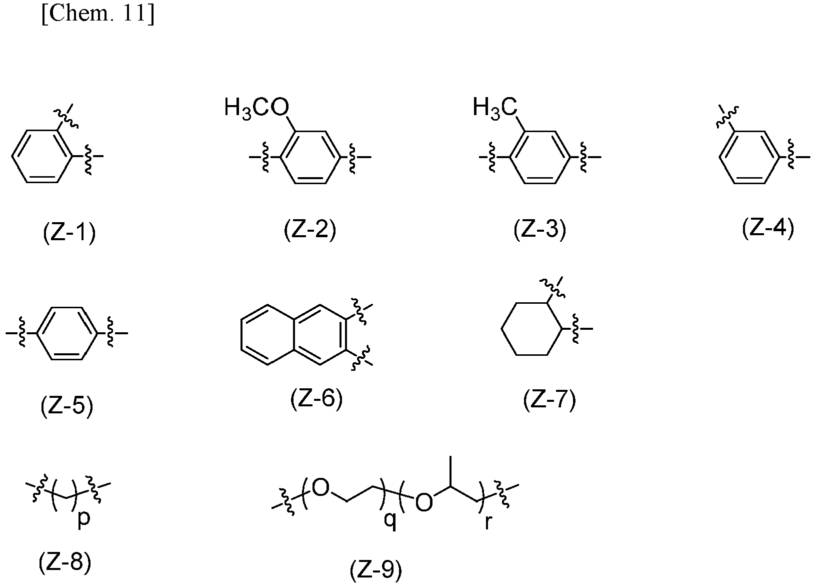 Herein the wavy line designates a point of attachment.

The carbinol-modified organosiloxane obtained by the method of the invention is characterized by R which is such that a ratio of [number of groups having formula (VI)]/[total number of groups having formulae (V) and (VI)] is less than 0.01. If the ratio is 0.01 or more, the carbinol-modified organosiloxane contains more side reaction products and when used as a resin modifier, may invite a decline of the molecular weight of the resin, detracting from its mechanical properties.

Specifically, the preferred ratio of [number of groups having formula (VI)]/[total number of groups having formulae (V) and (VI)] is up to 0.005.

It is noted that the ratio used herein is computed in ²⁹Si-NMR spectroscopy from the integrated value of signals assigned to Si of -O-Si(R¹)₂-CH₂- structure derived from formula (V) and the integrated value of signals assigned to Si of -O-Si(R¹)₂-O-Z- structure derived from formula (VI).

The content of platinum in the obtained carbinol-modified organosiloxane is preferably less than 0.20 ppmw. A platinum content within the range ensures to prevent coloration due to platinum of the carbinol-modified organosiloxane even when a purification step is omitted and coloration of a resin which is modified with the carbinol-modified organosiloxane.

Because of such a minimal impurity content, the carbinol-modified organosiloxanes obtained by the method of the invention are useful as resin modifiers.

The resin to be modified therewith is not particularly limited, and examples thereof include polycarbonate, polyurethane, polyester, and epoxy resins.

Examples and Comparative Examples are given below for further illustrating the invention.

As used herein, the term "terminal impurity ratio" refers to a ratio [number of groups having formula (VI)]/[total number of groups having formulae (V) and (VI)], which was computed from the integrated value of signals assigned to Si of -O-Si(R¹)₂-CH₂-structure derived from formula (V) and the integrated value of signals assigned to the Si of -O-Si(R¹)₂-O-Z- structure derived from formula (VI) in the ²⁹Si-NMR spectrum of a carbinol-modified organosiloxane.

### Example 1

While heating at 50°C, an organohydrogenpolysiloxane having the following average formula (1) at 380 kg/h, 2-allylphenol at 19 kg/h, and a platinum catalyst (i.e. toluene solution of 1,3-divinyl-1,1,3,3-tetramethyldisiloxane complex of neutralized chloroplatinic acid) were each fed to a 150-L tubular reactor at a rate to provide 0.02 ppmw of platinum metal based on the mixture in the system. The mixture was passed through the tubular reactor at 80°C over 20 minutes for reaction. Thereafter the reaction product was continuously taken out into a storage tank. The carbinol-modified organosiloxane thus obtained had a terminal impurity ratio of 0.0010.

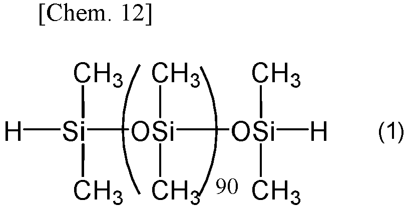

### Example 2

The same procedure as in Example 1 was repeated except that the concentration of the platinum catalyst was changed to 0.10 ppmw of platinum metal. The resulting carbinol-modified organosiloxane had a terminal impurity ratio of 0.0025.

### Comparative Example 3

The same procedure as in Example 1 was repeated except that the concentration of the platinum catalyst was changed to 0.48 ppmw of platinum metal. The resulting carbinol-modified organosiloxane had a terminal impurity ratio of 0.005.

### Comparative Example 4

While heating at 50°C, 380 kg of an organohydrogenpolysiloxane having the average formula (1), 19 kg of 2-allylphenol, and an amount to provide 0.75 ppmw of platinum metal based on the mixture in the system of a platinum catalyst (i.e. toluene solution of 1,3-divinyl-1,1,3,3-tetramethyldisiloxane complex of neutralized chloroplatinic acid) were stirred and mixed for 10 minutes in a stirred tank. The resulting mixture was passed through a 150-L tubular reactor at 80°C and 400 kg/h over 20 minutes for reaction. Thereafter the reaction product was continuously taken out into a storage tank. The resulting carbinol-modified organosiloxane had a terminal impurity ratio of 0.009.

### Comparative Example 5

The same procedure as in Example 1 was repeated except that 23 kg/h of eugenol was fed instead of 19 kg/h of 2-allylphenol and the concentration of the platinum catalyst was changed to 0.90 ppmw of platinum metal. The resulting carbinol-modified organosiloxane had a terminal impurity ratio of 0.008.

### Comparative Example 1

The same procedure as in Example 4 was repeated except that the concentration of the platinum catalyst was changed to 1.0 ppmw of platinum metal. The resulting carbinol-modified organosiloxane had a terminal impurity ratio of 0.010.

### Comparative Example 2

The same procedure as in Example 1 was repeated except that the concentration of the platinum catalyst was changed to 1.5 ppmw of platinum metal. The resulting carbinol-modified organosiloxane had a terminal impurity ratio of 0.021.

## Claims

1. A method for preparing a carbinol-modified organosiloxane, comprising the steps of:
(A) continuously feeding components (a) to (c) to a tubular reactor:
(a) organohydrogensiloxane having the following formula (I): 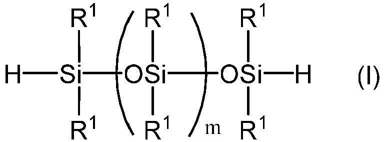 wherein each R¹ independently is a C₁-C₂₀ monovalent hydrocarbon group and m is an integer of 0 to 500,
(b) compound having the following formula (II):
R²-Z-OH (II)
wherein R² is vinyl or allyl, Z is a divalent hydrocarbon group, one or more hydrogen atoms in the divalent hydrocarbon group may be replaced by halogen or a C₁-C₂₀ monovalent hydrocarbon group, and one or more carbon atoms in the divalent hydrocarbon group and the monovalent hydrocarbon group may be replaced by oxygen, nitrogen or sulfur,
(c) platinum catalyst, in an amount to give from 0.005 ppm by weight to 0.2 ppm by weight of platinum metal based on the total weight of components (a) to (c);
(B) effecting hydrosilylation reaction of components (a) to (c) during passage through the tubular reactor to form a reaction product, and
(C) taking out the reaction product.

2. A method of claim 1 wherein step (A) includes mixing components (a) to (c) and then continuously feeding the mixture to the tubular reactor.

3. A method of claim 1 or 2 wherein component (c) is added in an amount to give from 0.010 ppm by weight to 0.1 ppm by weight of platinum metal based on the total weight of components (a) to (c).

4. A method of any one of claims 1 to 3 wherein R¹ is methyl or phenyl, and/or m is an integer of 30 to 200.

5. A method of any one of claims 1 to 4 wherein component (b) is a compound having the following formula (III): 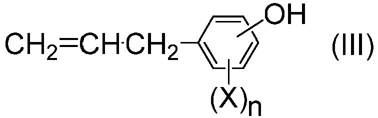 wherein X is halogen or a C₁-C₂₀ monovalent hydrocarbon group, one or more hydrogen atoms in the monovalent hydrocarbon group may be replaced by halogen, one or more carbon atoms in the monovalent hydrocarbon group may be replaced by oxygen, nitrogen or sulfur, and n is an integer of 0 to 4.

6. A method of claim 5 wherein X is methyl or methoxy, or n is 0.

7. A method of any one of claims 1 to 4 wherein component (b) is selected from the following formulae: 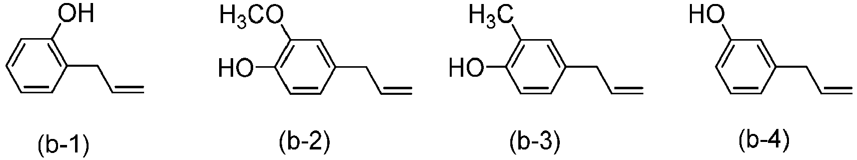 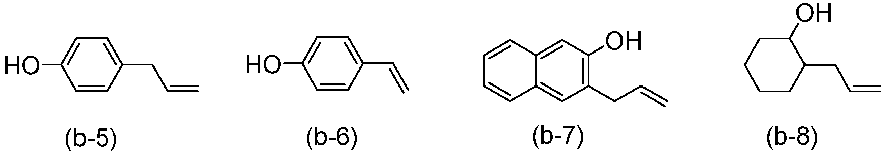 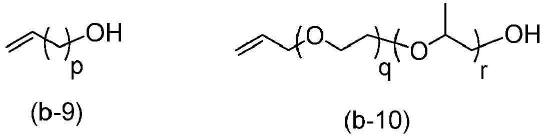 wherein p, q and r are each independently an integer of 0 to 50.

## Patentansprüche

1. Verfahren zur Herstellung eines Carbinol-modifizierten Organosiloxans, das die folgenden Schritte umfasst:
(A) das kontinuierliche Zuführen der Komponenten (a) bis (c) zu einem Rohrreaktor:
(a) Organohydrogensiloxan der folgenden Formel (I): 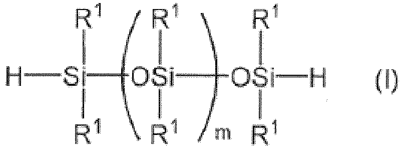 worin die R¹ jeweils unabhängig voneinander eine einwertige C₁-C₂₀-Kohlenwasserstoffgruppe sind und m eine ganze Zahl von 0 bis 500 ist,
(b) einer Verbindung der folgenden Formel (II):
R²-Z-OH (II)
worin R² Vinyl oder Allyl ist, Z eine zweiwertige Kohlenwasserstoffgruppe ist, wobei gegebenenfalls ein oder mehrere Wasserstoffatome in der zweiwertigen Kohlenwasserstoffgruppe durch Halogen oder eine einwertige C₁-C₂₀-Kohlenwasserstoffgruppe ersetzt sind und gegebenenfalls ein oder mehrere Kohlenstoffatome in der zweiwertigen Kohlenwasserstoffgruppe und der einwertigen Kohlenwasserstoffgruppe durch Sauerstoff, Stickstoff oder Schwefel ersetzt sind,
(c) eines Platinkatalysators in einer solchen Menge, dass 0,005 Gew.-ppm bis 0,2 Gew.-ppm Platinmetall, bezogen auf das Gesamtgewicht der Komponenten (a) bis (c) erhalten werden;
(B) das Durchführen einer Hydrosilylierungsreaktion der Komponenten (a) bis (c) während des Hindurchleitens durch den Rohrreaktor, um ein Reaktionsprodukt zu bilden;
und
(C) das Entnehmen des Reaktionsprodukts.

2. Verfahren nach Anspruch 1, wobei Schritt (A) das Vermischen der Komponenten (a) bis (c) und das anschließende kontinuierliche Zuführen des Gemischs zum Rohrreaktor umfasst.

3. Verfahren nach Anspruch 1 oder 2, wobei Komponente (c) in einer solchen Menge zugesetzt wird, dass 0,010 Gew.-ppm bis 0,1 Gew.-ppm Platinmetall, bezogen auf das Gesamtgewicht der Komponenten (a) bis (c) erhalten werden.

4. Verfahren nach einem der Ansprüche 1 bis 3, wobei R¹ Methyl oder Phenyl ist und/oder m eine ganze Zahl von 30 bis 200 ist.

5. Verfahren nach einem der Ansprüche 1 bis 4, wobei Komponente (b) eine Verbindung der folgenden Formel (III) ist: 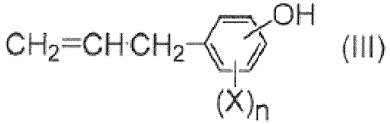 worin X Halogen oder eine einwertige C₁-C₂₀-Kohlenwasserstoffgruppe ist, wobei gegebenenfalls ein oder mehrere Wasserstoffatome in der einwertigen Kohlenwasserstoffgruppe durch Halogen ersetzt sind und gegebenenfalls ein oder mehrere Kohlenstoffatome in der einwertigen Kohlenwasserstoffgruppe durch Sauerstoff, Stickstoff oder Schwefel ersetzt sind, und n eine ganze Zahl von 0 bis 4 ist.

6. Verfahren nach Anspruch 5, wobei X Methyl oder Methoxy ist oder n = 0 ist.

7. Verfahren nach einem der Ansprüche 1 bis 4, wobei Komponente (b) aus den folgenden Formeln ausgewählt ist: 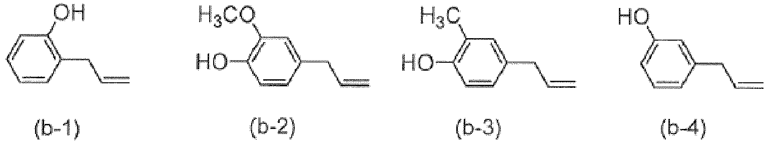 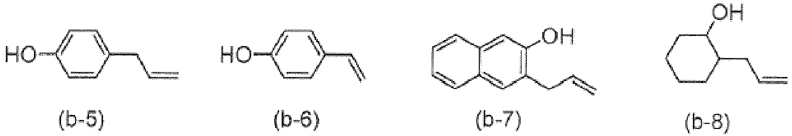 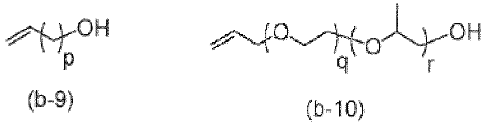 worin p, q und r jeweils unabhängig voneinander ganze Zahlen von 0 bis 50 sind.

## Revendications

1. Procédé de préparation d'un organosiloxane modifié par du carbinol, comprenant les étapes consistant à :
(A) alimenter en continu des composants (a) à (c) d'un réacteur tubulaire :
(a) un organohydrogensiloxane présentant la formule (I) suivante : 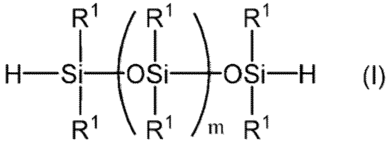
dans laquelle chaque R¹ est indépendamment un groupe hydrocarboné monovalent en C₁-C₂₀ et
m est un nombre entier de 0 à 500,
(b) un composé présentant la formule (II) suivante :
**R²-Z-OH** **(II)**
dans laquelle R² est un vinyle ou un allyle, Z est un groupe hydrocarboné divalent, un ou plusieurs atomes d'hydrogène dans le groupe hydrocarboné divalent peuvent être remplacés par un halogène ou un groupe hydrocarboné monovalent en C₁-C₂₀, et un ou plusieurs atomes de carbone dans le groupe hydrocarboné divalent et le groupe hydrocarboné monovalent peuvent être remplacés par de l'oxygène, de l'azote ou du soufre,
(c) un catalyseur de platine, en une quantité permettant d'obtenir de 0,005 ppm en à 0,2 ppm en poids de platine métallique sur la base du poids total des composants (a) à (c) ;
(B) effectuer une réaction d'hydrosilylation des composants (a) à (c) pendant un passage dans le réacteur tubulaire pour former un produit de réaction, et
(C) extraire le produit de réaction.

2. Procédé selon la revendication 1, dans lequel l'étape (A) comprend le mélange des composants (a) à (c), puis l'alimentation en continu du mélange dans le réacteur tubulaire.

3. Procédé selon la revendication 1 ou 2, dans lequel le composant (c) est ajouté en une quantité permettant d'obtenir de 0,010 ppm en poids à 0,1 ppm en poids de platine métallique sur la base du poids total des composants (a) à (c).

4. Procédé selon l'une quelconque des revendications 1 à 3, dans lequel R¹ est un groupe méthyle ou phényle, et/ou m est un nombre entier de 30 à 200.

5. Procédé selon l'une quelconque des revendications 1 à 4 dans lequel le composant (b) est un composé présentant la formule (III) suivante : 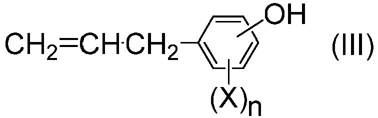 dans laquelle X est un halogène ou un groupe hydrocarboné monovalent en C₁-C₂₀, un ou plusieurs atomes d'hydrogène dans le groupe hydrocarboné monovalent peuvent être remplacés par un halogène, un ou plusieurs atomes de carbone dans le groupe hydrocarboné monovalent peuvent être remplacés par de l'oxygène, de l'azote ou du soufre, et n est un nombre entier de 0 à 4.

6. Procédé selon la revendication 5, dans lequel X est un groupe méthyle ou méthoxy, ou n est 0.

7. Procédé selon l'une quelconque des revendications 1 à 4 dans lequel le composant (b) est choisi parmi les formules suivantes : 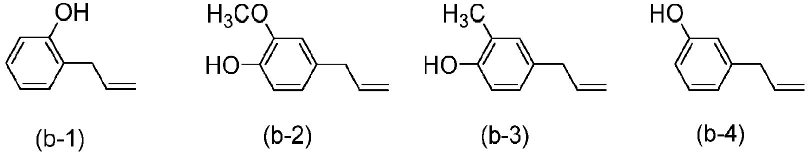 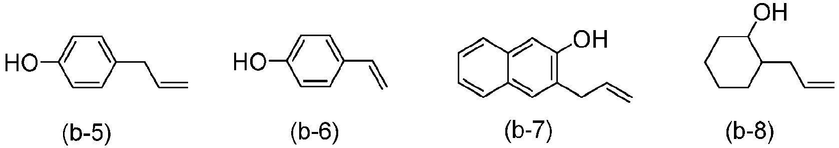 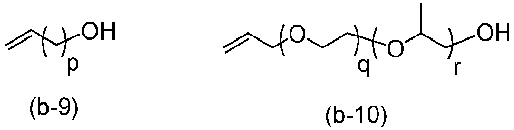 p, q et r étant chacun indépendamment un nombre entier de 0 à 50.
